# NOUVEAU FASCICULE DE BREVET EUROPEEN

(11) **EP 0 394 413 B2**
(45) Date de publication et mention de la décision concernant l'opposition: **23.04.1997**
(45) Mention de la délivrance du brevet: 06.07.1994
(21) Numéro de dépôt: 89911822.8
(22) Date de dépôt: 06.10.1989
(51) Int. Cl.: H04N 5/645

(54) **FACADE DE POSTE DE TELEVISION**
FERNSEHGERÄTVORDERÖFFNUNG
TELEVISION SET FRONT

(30) Priorité: 19.10.1988 FR 8813761
(43) Date de publication de la demande: 31.10.1990
(73) Titulaire: THOMSON TELEVISION ANGERS, 92400 Courbevoie (FR)
(72) Inventeur: HUERRE, Dominique, F-49000 Angers (FR); MEHU, Jacques, F-49124 S.-Barthélémy-d'Anjou (FR)
(74) Mandataire: Brykman, Georges
(86) Numéro de dépôt international: FR8900515
(87) Numéro de publication internationale: WO9004902

(56) Documents cités:
- EP-A- 0 232 917
- EP-B- 0 058 098
- DE-A- 3 315 448
- DE-A- 3 619 232
- US-A- 4 360 838
- Dessin de fabrication no. 64161364-68 de la façade d'un téléviseur , du groupe SEL
- Prospectus "TV, Videotex, Video Hifi" de l'entreprise Loewe
- Dessin de fabrication no. 636/750-82371 de la façade d'un téléviseur, de l'entreprise Loewe Opta GmbH
- Prospectus "Loewe 1981 TV, Video, HiFi" de l'entreprise Loewe
- Dessin de fabrication no. 604/750-79750 de la façade d'un téléviseur, de l'entreprise Loewe Opta GmbH

## Description

La présente invention se rapporte à une façade de poste de télévision.

Les façades de postes de télévision, en particulier de ceux munis de tubes cathodiques dits à "écran plat", présentent généralement des défauts esthétiques. Le rebord intérieur des façades n'est pas régulièrement appliqué contre l'écran : ce rebord a théoriquement la même courbure que l'écran, mais du fait des tolérances de fabrication et du centrage approximatif du tube par rapport à la façade lors du montage du tube, le rebord de la façade n'est pas appliqué uniformément contre l'écran.

En outre, les vibrations subies par les postes pendant leur transfert et leur fonctionnement provoquent l'abrasion du rebord de la façade au contact de l'écran. Les poussières produites par cette abrasion restent sur l'écran.

Enfin, les façades connues ne soutiennent pas de façon efficace les tubes cathodiques qui, en cas de petite chute des postes, peuvent être détruits.

On connaît d'après le document EP-A-0 232 917 une façade pour poste de télévision comportant des nervures rigides assurant le maintien du tube cathodique, mais on n'y suggère aucun moyen assurant l'auto-centrage du tube cathodique.

On connaît également du brevet EP 0058098 délivré à la demanderesse un récepteur de télévision comportant un écran en saillie à l'extérieur de l'ouverture de la façade du boîtier du téléviseur, mais avec un jeu entre le bord de l'ouverture et le rebord du tube à l'arrière de l'écran. La façade de ce récepteur comprend des organes élastiques agissant sur la ceinture de maintien de telle sorte que le jeu entre le bord de l'ouverture et le rebord du tube à l'arrière de l'écran soit régulier. Dans le cas du récepteur décrit dans le brevet EP 58098 le problème de régularité du jeu se trouve résolu par le fait que les pattes élastiques agissent sensiblement dans la direction de la diagonale du tube. Lorsque les forces exercées par les pattes élastiques sont en équilibre les quatres coins du tube sont chacun à égale distance des quatres coins de la façade. Dans le cas de la présente invention le rebord au contact du tube se situe au niveau de l'écran du tube, c'est à dire de la face avant de ce tube.

L'invention concerne donc une façade de poste de télévision telle que décrite dans la revendication 1.

La présente invention a pour objet une façade de poste de télévision qui puisse s'appliquer le mieux possible contre l'écran du tube cathodique sur toute la longueur de son rebord, sans produire de poussières visibles gênantes, et qui permette de bien centrer automatiquement le tube cathodique au montage tout en le soutenant de façon efficace et en le protégeant des chocs.

Au montage du tube cathodique, la façade est appliquée contre l'écran d'abord au milieu de sa longueur, puis progressivement vers ses bords.

Selon encore une autre caractéristique de l'invention, la façade comporte sur son rebord intérieur plusieurs nervures de maintien disposées sensiblement perpendiculairement à la surface principale de la façade et qui sont sensiblement perpendiculaires à la direction de la ceinture du tube cathodique, ces nervures étant solidaires de la cloison périphérique de la façade. De façon avantageuse, ces nervures sont réalisées par paires de nervures parallèles entre elles et reliées près de leurs extrémités se trouvant du côté du rebord par une nervure.

La présente invention sera mieux comprise à la lecture de la description détaillée d'un mode de réalisation pris à titre d'exemple non limitatif et illustré par le dessin annexé, sur lequel :
- la figure 1 est une vue arrière en plan d'une façade de téléviseur conforme à l'invention,
- la figure 2 est une vue d'arrière partielle d'un coin de la façade de la figure 1, et
- la figure 3 est une vue en coupe, selon III-III de la figure 2.

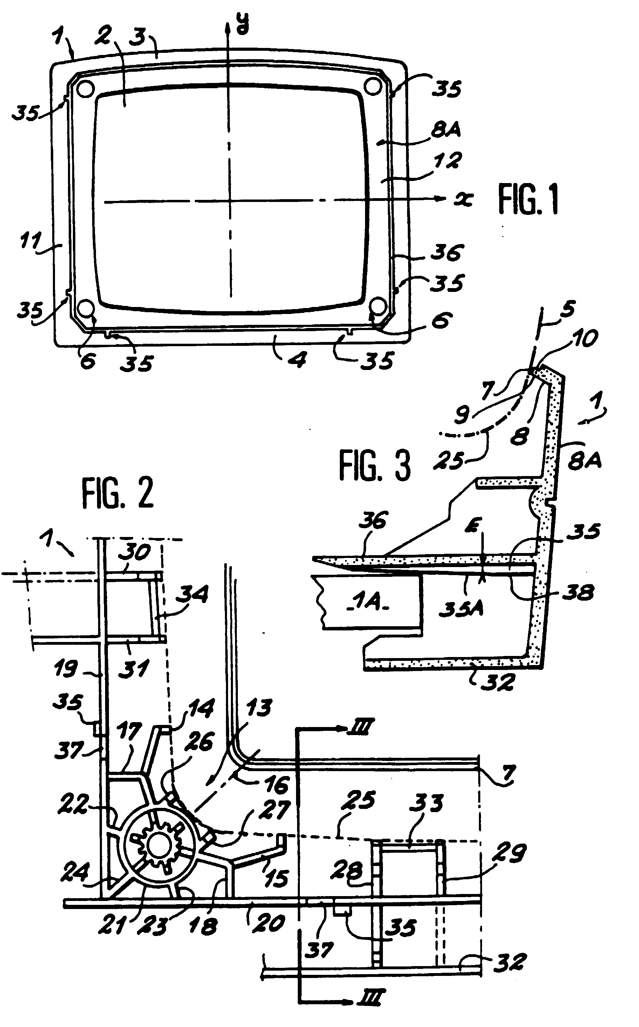

La façade 1 de poste de télévision représentée en figure 1 est plus particulièrement destinée à des postes dont le tube cathodique a un écran presque plat, mais il est bien entendu que l'invention s'applique également à des tubes cathodiques à écran plus incurvé. La façade 1 peut aussi bien avoir un contour rectangulaire qu'un contour à côtés courbes. Cette façade peut être symétrique ou asymétrique par rapport aux axes Ox et Oy de l'écran 2. Pour la bonne mise en oeuvre de l'invention, il est préférable que les côtés horizontaux 3,4 de la façade 1 ne soient pas trop rigides en flexion, ce qui lui permet de mieux épouser la surface 5 de l'écran 2 sur lequel elle est appliquée.

On procède de la façon suivante pour la mise en place de la façade 1 sur un tube cathodique comportant un dispositif de fixation de façade, par exemple du type à vissage fixé aux quatre coins de l'écran sur des oreilles solidaires de la ceinture anti-implosion du tube (les parties femelles de ce dispositif de vissage, dans le cas présent du type connu en soi à vis autotaraudeuse, sont bloquées dans des emplacements 6 de forme appropriée formés sur la face interne de la façade 1).

La façade présente une surface 7 qui doit être mise en contact le plus intime possible avec l'écran 2. Cette surface 7 est formée par le chant du rebord 8 de la découpe de la façade 1. La rebord 8 est dirigé vers l'intérieur du poste, et a pratiquement la même épaisseur, par exemple environ 2 à 5 mm, que les autres parois de la façade 1, en particulier la paroi principale 8A de cette façade. L'extrémité 9 du rebord 8 a une épaisseur réduite unilatéralement, par exemple de moitié. Cette réduction d'épaisseur est réalisée sur la face extérieure 10 du rebord 8. Ainsi, la surface annulaire 7 a une faible largeur, ce qui fait que son frottement contre l'écran 2 crée moins de débris que sans ladite réduction d'épaisseur. D'autre part, les débris pulvérulents créés par ce frottement restent pour la plupart dans le redans formé par la réduction d'épaisseur, et ne sont donc pas visibles par l'utilisateur. Selon l'invention, la surface gauche 7 a un rayon de courbure supérieur à celui de l'écran 2.

Lors de l'assemblage du tube cathodique et de la façade 1, on procède de la façon suivante, afin d'assurer un contact le plus intime possible entre la surface 7 et l'écran 2. On applique contre l'écran du tube immobilisé d'abord les milieux des côtés horizontaux 3,4 de la façade 1, puis, en maintenant toujours la pression sur ces milieux, on applique sous pression les autres parties des côtés 3,4 en s'éloignant symétriquement de leurs milieux, puis les côtés verticaux 11,12 de la façade et enfin on visse le dispositif de vissage du tube en maintenant la pression sur toute la façade. Ainsi, du fait de son rayon de courbure plus élevé, la surface 7 est appliquée sur sa totalité contre l'écran 2.

L'autocentrage du tube par rapport à la façade 1, c'est-à-dire le positionnement correct de la surface utile de l'écran 2 par rapport à l'ouverture (ou "fenêtre) de la façade, est assuré grâce à quatre dispositifs de centrage 13 formés chacun dans la zone d'un emplacement 6. Chaque dispositif 13 comporte au moins deux pattes élastiques 14,15 disposées symétriquement par rapport à la bissectrice 16 de l'angle correspondant de la façade. Ces pattes 14,15 ont toutes une même forme de languettes, planes sur la plus grande partie de leur longueur. Cette partie plane fait un angle d'environ 30 à 45° par rapport à la bissectrice 16. Las extrémités de ces pattes sont coudées et sont respectivement parallèles aux axes Ox et Oy de l'écran 2. Ces pattes 14,15 sont perpendiculaires à la surface principale de la façade 1. Ces pattes 14,15 sont formées en excroissance sur des nervures fixes et rigides 17,18 respectivement. Dans le mode de réalisation représenté sur le dessin, les nervures 17,18 sont reliées à une de leurs extrémités à des nervures rigides et rectilignes 19,20 respectivement, qui sont respectivement parallèles aux axes Oy,Ox de l'écran 2, et à leur autre extrémité à un cylindre court 21 dont l'axe se trouve sur la bissectrice 16, le cylindre 21 étant placé tout près du coin des nervures 19,20, et relié à celles-ci par trois autres nervures courtes 22,23,24, la nervure 24 étant située sur la bissectrice 16, et rejoignant le coin des nervures 19,20 et les nervures 22,23 étant symétriques par rapport à la nervure 24, près de celle-ci. Las nervures 17,18 sont plus éloignées de la nervure 24 que ne le sont les nervures 22,23. Toutes les nervures précitées sont perpendiculaires au plan principal de la façade 1 et sont reliées à la face intérieure de la façade. Las quatre cylindres 21, dont les axes sont perpendiculaires à la surface principale de la façade 1 (qui est parallèle au plan de dessin dans le cas des figures 1 et 2), et situés aux emplacements 6 précités, servent de logements aux dispositifs de vissage du tube cathodique (non représentés). La ceinture ("mold match line") 25 du tube cathodique s'appuie sur les chants des extrémités des pattes 14,15. De façon avantageuse, on peut compléter le dispositif de centrage 13 avec des courtes pattes 26,27 formées sur le cylindre 21, parallèlement à la bissectrice 16, équidistantes et proches de celle-ci.

La longueur de ces pattes 14,15,26,27 est telle que leurs extrémités arrivent au niveau théorique de la ceinture 25. Ainsi, lorsque l'on présente la façade 1 sur le tube cathodique, ce dernier se place correctement entre les dispositifs 13, c'est-à-dire que ses diagonales se confondent avec les bissectrices 16 correspondantes.

Pour que la façade 1 puisse maintenir et protéger le tube cathodique en cas de chocs sur le poste de télévision, et même de chutes de faible hauteur de ce poste, on forme sur la face arrière de cette façade des nervures de maintien. Ces nervures sont perpendiculaires à la surface principale de la façade et sensiblement perpendiculaires à la direction de la ceinture 25, et elles s'étendent jusqu'au niveau le plus avancé de cette ceinture, pour tenir compte de toutes les tolérances de fabrication. De façon avantageuse, ces nervures sont formées par couples de nervures parallèles telles que les couples de nervures 28,29 et 30,31. Ces nervures prennent "appui" sur d'autres nervures ou rebords existant sur la façade 1 et qui leur sont sensiblement perpendiculaires.

Ainsi, par exemple, les nervures 28,29 prennent appui sur la nervure 20 et la ceinture extérieure 32 de la façade, auxquels elles sont perpendiculaires. Las nervures 30,31 prennent appui sur la nervure 19 ainsi que sur d'autres nervures ou rebords non représentés sur le dessin.

En outre, les nervures de chaque couple sont reliées entre elles par une nervure transversale 33,34 proche de leur extrémité en vis-à-vis de la ceinture 25.

Bien entendu, tous les couples de nervures de maintien sont formés intégralement avec les nervures ou rebords sur lesquels elles s'appuient. Ainsi, les éventuelles poussées que le tube cathodique peut exercer sur les nervures de maintien sont reprises par ces autres nervures ou rebords sur lesquels elles s'appuient.

Pour réaliser un autocentrage de la façade 1 lors de son montage sur l'ébénisterie 1A du poste de télévision, on munit la façade de petites nervures 35 formées intégralement avec la jupe d'agrafage (référencée 36 dans son ensemble) de cette façade.

Habituellement, la jupe d'agrafage se présente comme une nervure fine et très large (par exemple 3 à 5 cm environ de largeur) formée sur la face intérieure de la façade, parallèlement à la ceinture périphérique extérieure 32 de cette façade (c'est-à-dire perpendiculairement au plan principal de la façade). La jupe 36 forme ainsi un cadre sensiblement rectangulaire. Las nervures 19 et 20 citées ci-dessus font partie de la jupe 36.

Pour assurer à la jupe 36 une certaine souplesse en flexion, on pratique en plusieurs endroits de sa longueur des encoches 37. Dans un exemple de réalisation, ces encoches 37 sont situées aux extrémités de chaque côté de la jupe 36, à proximité des emplacements 6. La profondeur de ces encoches est légèrement inférieure à la largeur de la jupe. La largeur de ces encoches 37 est d'environ 3 à 10 mm, et elles sont pratiquées perpendiculairement au plan principal de la façade. La long de l'un des côtés de chaque encoche (excepté les encoches du côté horizontal supérieur de la jupe 36), on forme sur la face extérieure de la jupe lesdites nervures 35. La largeur transversale des nervures 35 (mesurée parallèlement au côté correspondant de la façade) est d'environ 2 à 3 mm.

L'épaisseur E (mesurée perpendiculairement au côté correspondant de la façade) des nervures 35 est pratiquement nulle au bord de la jupe et augmente régulièrement sur une grande partie de leur longueur, puis est constante, à sa valeur maximale, sur la dernière partie de sa longueur (sur les 5 derniers millimètres par exemple), jusqu'à la base de la jupe (c'est-à-dire la jonction de la jupe et de la paroi principale 8A de la façade 1). La valeur maximale de l'épaisseur E est d'environ 2 à 4 mm.

Pour des raisons d'esthétique, il est préférable que la face supérieure de la ceinture périphérique 32 de la façade arrive au niveau de la face extérieure de la paroi supérieure de l'ébénisterie du poste de télévision (pour masquer le chant antérieur de cette paroi), alors que si le chant de la paroi inférieure est légèrement découvert (partie inférieure de la ceinture 32 plus haute que la face extérieure de la paroi horizontale de l'ébénisterie), il n'est généralement pas visible. Pour ces raisons, on ne forme pas de nervures 35 sur la partie horizontale supérieure de la jupe 36. Bien entendu, les nervures 35 de la jupe 36 ne sont pas formées obligatoirement à proximité immédiate des encoches 37, ni à proximité des emplacements 6, et leur nombre peut être différent.

Soient 38 les zones des chants 35A des nervures 35 où l'épaisseur E est maximale (c'est-à-dire près de la base de la jupe 36). Cette épaisseur E est telle que la distance nominale entre les zones 38 de deux nervures correspondantes des côtés opposés 11,12 soit pratiquement égale à la distance maximale tolérée entre les parois verticales de l'ébénisterie. De façon analogue, la distance entre les zones 38 des nervures de la partie horizontale inférieure de la jupe 36 et la face extérieure de la partie supérieure de la jupe 36 est pratiquement égale à la distance maximale tolérée entre les parois horizontales de l'ébénisterie.

Ainsi, lorsque l'on met en place la façade 1 sur l'ébénisterie 1A en introduisant la jupe 36 dans cette ébénisterie, la jupe pénètre facilement dans l'ébénisterie, étant bien entendu que l'automate de mise en place de la façade présente correctement la façade devant l'ébénisterie. A un certain moment de l'enfoncement de la jupe dans l'ébénisterie, qui est fonction des cotes réelles de la façade et de l'ébénisterie (compte tenu des tolérances dimensionnelles de fabrication), les chants 35A des nervures 35 s'appuient sur les faces internes de l'ébénisterie, forçant la façade à se centrer par rapport à l'ébénisterie dans le sens horizontal, et la sollicitant, le cas échéant, vers le haut. Dans le cas où la distance entre les parois de l'ébénisterie est maximale, seule la région des zones 38 des nervures 35 est en contact avec les parois de l'ébénisterie, et la jupe n'est pas du tout fléchie. Dans le cas contraire, la jupe commence à fléchir peu après son introduction dans l'ébénisterie.

## Revendications

1. Façade (1) de poste de télévision présentant un rebord intérieur (8) dont la surface de contact (7) avec l'écran (2) du tube cathodique a un rayon de courbure plus grand que celui de la surface de l'écran (2) et dans chaque coin (16) de sa face intérieure deux pattes élastiques d'autocentrage du tube cathodique disposées symétriquement par rapport à la bissectrice de ce coin (16) caractérisée en ce que cette façade comporte sur son pourtour intérieur plusieurs nervures (28-31) de maintien du tube cathodique, en ce que les pattes élastiques (14,15) ont leurs extrêmités disposées parrallèlement aux axes médians (Ox Oy) de l'écran et agissent sur le tube parrallèllement aux axes médians (Ox Oy) (2) et en ce que l'extrémité du dit rebord (8) présente un redan (10) provoqué par une réduction de l'épaisseur dudit rebord pratiquée sur celui-ci (10) du coté extérieur au poste de télévision.

2. Façade selon la revendication 1, caractérisée par le fait que les nervures de maintien (28-31) sont disposées sensiblement perpendiculairement à la surface principale de la façade et sont sensiblement perpendiculaire à la direction de la ceinture (25) du tube.

3. Façade selon la revendication 2, caractérisée en ce que les nervures de maintien sont formées intégralement avec d'autres nervures (19, 20) ou rebords (32) sur lesquels elles prennent appui et qui sont sensiblement perpendiculaires à la surface principale de la façade.

4. Façade selon la revendication 3, caractérisée par le fait que les nervures de maintien sont réalisées par paires de nervures parallèles entre elles et reliées à leurs extrémités en vis-à-vis du tube par une nervure (33, 34).

5. Façade selon l'une quelconque des revendications précédentes, caractérisée par le fait que sa jupe (36) d'agrafage comporte sur sa face extérieure des nervures (35) d'épaisseur (E) croissante assurant le centrage de la façade.

## Patentansprüche

1. Fernsehgerät-Frontseite (1) mit einem Innenrand (8), dessen Kontaktfläche (7) mit dem Bildschirm (2) der Kathodenstrahlröhre einen Krümmungsradius aufweist, der größer ist als der der Bildschirmfläche (2), und mit in jeder Ecke (16) seiner Innenfläche zwei elastischen Nasen zur Selbstzentrierung der Kathodenstrahlröhre, die symmetrisch bezüglich der Winkelhalbierenden dieser Ecke (16) angeordnet sind, dadurch gekennzeichnet, daß diese Frontseite an ihrem Innenumfang mehrere Rippen (28 - 31) zum Festhalten der Kathodenstrahlröhre aufweist und daß die Enden der elastischen Nasen (14, 15) parallel zu den Mittelachsen (Ox, Oy) des Bildschirms (2) angeordnet sind und parallel zu den Mittelachsen (Ox, Oy) auf die Röhre einwirken, und daß das Ende des Rands (8) eine Stufe (10) aufweist, die durch eine Verminderung der Dicke des Rands erzeugt wird, welche von der vom Fernsehgerät weg weisenden Seite an ihm (8) durchgeführt wird.

2. Frontseite nach Anspruch 1, dadurch gekennzeichnet, daß die Halterippen (28 - 31) im wesentlichen senkrecht zur Hauptfläche der Frontseite angeordnet sind und im wesentlichen senkrecht zur Richtung des Gürtels (25) der Röhre verlaufen.

3. Frontseite nach Anspruch 2, dadurch gekennzeichnet, daß die Halterippen einstückig mit weiteren Rippen (19, 20) oder Rändern (32) ausgebildet sind, an denen sie sich abstützen und die sich im wesentlichen senkrecht zur Hauptfläche der Frontseite erstrecken.

4. Frontseite nach Anspruch 3, dadurch gekennzeichnet, daß die Halterippen durch Paare zueinander paralleler Rippen gebildet sind, die an ihren der Röhre gegenüberliegenden Enden durch eine Rippe (33, 34) verbunden sind.

5. Frontseite nach einem der vorhergehenden Ansprüche, dadurch gekennzeichnet, daß ihre Falzschürze (36) an ihrer Außenfläche Rippen (35) mit zunehmender Dicke (E) aufweist, die die Zentrierung der Frontseite gewährleisten.

## Claims

1. Television set fascia (1), having an inner rim (8) of which the surface of contact (7) with the screen (2) of the cathode-ray tube has a larger radius of curvature than that of the surface of the screen (2), and, in each corner (16) of its inner face, two elastic tabs for self-centring of the cathode-ray tube which are arranged symmetrically in relation to the bisector of this corner (16), characterized in that it comprises, on its inner periphery, a plurality of ribs (28-31) for retaining the cathode-ray tube, in that the elastic tabs (14, 15) have their ends arranged parallel to the mid-axes (Ox, Oy) of the screen (2) and act on the tube parallel to the mid-axes (Ox, Oy) and in that the end of the said rim (8) has a step (10) caused by a reduction in the thickness of the said rim and made on the latter on the side external to the television set.

2. Fascia according to Claim 1, characterized in that the retaining ribs (28, 31) are arranged substantially perpendicularly to the main surface of the fascia and are substantially perpendicular to the direction of the surround (25) of the tube.

3. Fascia according to Claim 2, characterized in that the retaining ribs are formed integrally with other ribs (19, 20) or rims (32) on which they bear and which are substantially perpendicular to the main surface of the fascia.

4. Fascia according to Claim 3, characterized in that the retaining ribs are produced in pairs of ribs parallel to one another and connected at their ends facing the tube by means of a rib (33, 34).

5. Fascia according to any one of the preceding claims, characterized in that its fastening skirt (36) possesses, on its outer face, ribs (35) of increasing thickness (E) ensuring the centring of the fascia.
